# EUROPÄISCHE PATENTSCHRIFT

(11) **EP 1 673 955 B1**
(45) Veröffentlichungstag und Bekanntmachung des Hinweises auf die Patenterteilung: **05.09.2007**
(21) Anmeldenummer: 03762449.1
(22) Anmeldetag: 03.07.2003
(51) Int. Cl.: H04Q 7/24, H04L 12/28

(54) **VERMEIDUNG EINES FEHLVERHALTENS EINER VERMITTLUNGS-EINRICHTUNGS-STEUERUNG (MEDIA GATEWAY CONTROLLER) ODER VERMITTLUNGSEINRICHTUNG (MEDIA GATEWAY)**
AVOIDANCE OF AN INVALID FUNCTIONING OF A MEDIA GATEWAY CONTROLLER OR A MEDIA GATEWAY
SUPPRESSION DU FONCTIONNEMENT ERRONE D'UN DISPOSITIF DE COMMANDE DE PASSERELLE DE MEDIA OU D'UNE PASSERELLE DE MEDIA

(30) Priorität: 09.07.2002 DE 10231026
(43) Veröffentlichungstag der Anmeldung: 28.06.2006
(73) Patentinhaber: SIEMENS AKTIENGESELLSCHAFT, 80333 München (DE)
(72) Erfinder: GUARINO, Lorenzo, 20035 Lissone (IT); BELLING, Thomas, 81477 München (DE); DÖLLING, Uwe, 13127 Berlin-Buchholz (DE); SCHMITT, Georg, 80805 München (DE)
(86) Internationale Anmeldenummer: PCT/DE2003/002229
(87) Internationale Veröffentlichungsnummer: WO 2004/006598

(56) Entgegenhaltungen:
- WO-A-01/06800
- WO-A-03/024052
- US-A1- 2003 099 227

## Beschreibung

Die Erfindung betrifft Verfahren und Vorrichtungen zur Änderung der Codierung (mindestens) einer Nutzdaten-Verbindungsabschnitts- Terminierung an einem Mediagateway von einer Mediagateway-Steuerung an das Mediagateway.

US-2003/099227A1 beschreibt ein Verfahren zur Paketübertragung in einem NGN (=next generation network) Netz.

WO-01/06800A1 beschreibt ein Verfahren zum Verbindungsaufbau in einem Mobilfunknetz.

In den ITU-T- Protokollen H.248 und Q.1950 ist die Steuerung von sogenannten "Media Gateways" (=MGWs=Vermittlungseinrichtungen insbesondere in einem zellularen Mobilfunknetz oder Festnetz) durch sogenannte "Media Gateway Controller" (=Mediagatewaysteuerungen =MGCS) spezifiziert. Das Protokoll Q.1950 "Bearer independent Call Bearer Control Protocol" (CBC) kommt zusammen mit dem ebenfalls durch die ITU-T spezifizierten BICC Protokoll, Q.1902.4 zur Verwendung. Diese Protokolle sind auch für 3GPP-Anwendungen einsetzbar. Media Gateways verbinden unter anderem Nutzverbindungsabschnitte (zur Übertragung von Nutzdaten wie Sprache, Text, Multimedia) eines Telekommunikationsnetzes, und setzen gegebenenfalls unterschiedliche Codierungen, z.B. Sprachcodierungen wie G.711 oder AMR, ineinander um. Im folgenden wird unter Nutzverbindungsabschnittsterminierung, oder kurz Terminierung, die Terminierung eines Abschnittes einer durch das MGW vermittelten Nutzverbindung z.B. für Sprache oder Multimedia (Ton und Bild) an dieser MGW verstanden. Das MGW sendet und/oder empfängt durch diese Terminierung zur Nutzverbindung gehörende (Nutz-) Daten. Im Sprachgebrauch der Protokolle H.248 und Q.1950 entspricht einer Nutzverbindungsabschnittsterminierung eine sogenannte "Termination".

Die oben genannten Protokolle erlauben es, bestehende Nutzverbindungen zu verändern, z.B. durch die Wahl einer anderen Codierung. Die dabei benutzte Signalisierung zwischen MGC und MGW (Protokolle H.248 und Q.1950) ist so geartet, dass jede Terminierung in das MGW unabhängig von den anderen innerhalb das MGW mit ihr verbundenen Terminierungen verändert wird. Zum Beispiel kann das MGW angewiesen werden, an dieser Terminierung eine andere Codierung zu verwenden, oder keine Daten zu senden und/oder zu empfangen (=Inaktivierung dieser Terminierung am MGW = Isolierung dieser Terminierung am MGW). Das MGW weiß bei der Veränderung einer Terminierung nicht, ob nachfolgend auch andere durch sie mit dieser Terminierung verbundene Terminierungen geändert werden. Deswegen muss das MGW bei der Veränderung einer Terminierung sofort Maßnahmen ergreifen, wenn sich dadurch bei verbundenen Terminierungen (Im Sprachgebrauch der Protokolle H.248 und Q.1950 befinden sich innerhalb einer MGW miteinander verbundene Terminierungen in einem sogenannten gemeinsamen "Kontext".) unterschiedliche Codierungen ergeben und diese zum Beispiel durch sogenanntes Transcodieren ineinander umzusetzen. In besonderen Fällen soll jedoch die Codierung aller in das MGW miteinander verbundenen Terminierungen, die in demselben "Kontext" liegen, nahezu zeitgleich verändert werden, zum Beispiel, im Rahmen der sogenannten BICC "Codec Modification" oder "Codec Renegotiation" (siehe Q.1902.4), durch die die Codierung von existierenden Sprachverbindungen verändert werden kann. Die 3GPP benutzt die genannten BICC-Prozeduren zusätzlich auch, um bestehende Nutzverbindungen zwischen (den Nutzdatenarten) Sprache und Multimedia (d.h. einer Kombination von Sprache und Bild in einer gemeinsamen Codierung) umzuschalten. Der MGC kann solche Situationen auf Grund der bei ihm eingehenden sogenannten "Call Controll" Signalisierung, z.B. Q 1902.4, erkennen. Da die Signalisierung des MGC an den MGW sequentiell erfolgt, kommt es bei einem nahezu gleichzeitigen Umschalten aller verbundenen Terminierungen innerhalb eines MGW zu einem hier möglicherweise ungewollten Verhalten: Das MGW aktiviert kurzzeitig einen Transcoder, der dann fast sofort wieder deaktiviert wird. Dadurch wird unnötige Arbeitslast in einem MGW erzeugt und sein Durchsatz verringert. Es wäre akzeptabel, ist aber bisher technisch nicht möglich, kurzfristig die Verbindung zu unterbrechen. Zusätzlich stellt das MGW bei der Veränderung der ersten Terminierung eventuell fest, dass es die neue Codierung dieser Terminierung nicht in die noch an der/den andere(n) Terminierung(en) verwendete Codierung umsetzen kann. Dies kann zum Beispiel dann passieren, wenn zwischen einer Sprachverbindung und einer Multimediaverbindung oder einer allgemeinen Datenverbindung umgeschaltet wird. Das MGW lehnt deswegen in diesem Falle die Veränderung der Nutzverbindung über H.248/Q.1950 Signalisierung ab.

Aufgabe der vorliegenden Erfindung ist es, eine möglichst effiziente Umschaltung von Codierungen in an einem Mediagateway anliegenden Terminierungen auf eine Anweisung an das Mediagateway hin zu ermöglichen, und das umschalten zwischen Codierungen zu ermöglichen, die die Mediagateway nicht ineinander umsetzen kann. Die Aufgabe wird jeweils durch die Gegenstände der unabhängigen Ansprüche gelöst. Indem erfindungsgemäß ein Mediagateway MGW bei einem Eingang eines Befehls (zur Änderung der Codierung mindestens einer Terminierung in einem Kontext am MGW) mit der Prüfung der Verbindbarkeit (der Terminierungen dieses Kontexts mit neuer (für zumindest eine Terminierung durch Befehl geänderter) Kodierung) und ggf Aktivierung einer Transcodierung abwartet, bis es aufgrund von einer oder mehreren weiteren beim MGW eingehenden Signalisierungen feststellt, dass es alle aktuell anstehenden (also insbesondere alle noch nicht schon früher abgearbeiteten) Befehle zur Änderung von Codierungen in Terminierungen dieses Kontexts vorliegen hat, kann eine unnötige Arbeitslast durch ein kurzfristige Ein- und Ausschalten eines Transcoders (gemäß Stand der Technik) in das MGW vermieden werden. Die Feststellung, dass das MGW alle aktuell auszuführenden (=z.B. alle aktuell einem oder alle mehreren MGC(s) und/oder Vermittlungseinrichtung(en) bekannten (oder weitervermittelten) etc) Befehle zur Änderung von Codierungen in Terminierungen dieses Kontexts vorliegen hat trifft das Mediagateway MGW. Das Mediagateway verwendet hierzu die Signalisierung bei den BICC Prozeduren "Codec Modification" und "Codec Re-Negotiation" gemäß Q.1902.4 und Q.1950 unverändert wie bisher spezifiziert, und auch ohne das Nachrichten modifiziert werden müssten. Das erfindungsgemäße Verhalten der MGW als Reaktion auf eingehende Q.1950 Nachrichten weicht dagegen von dem bisher in Q.1950 spezifiziertem Verhalten ab.

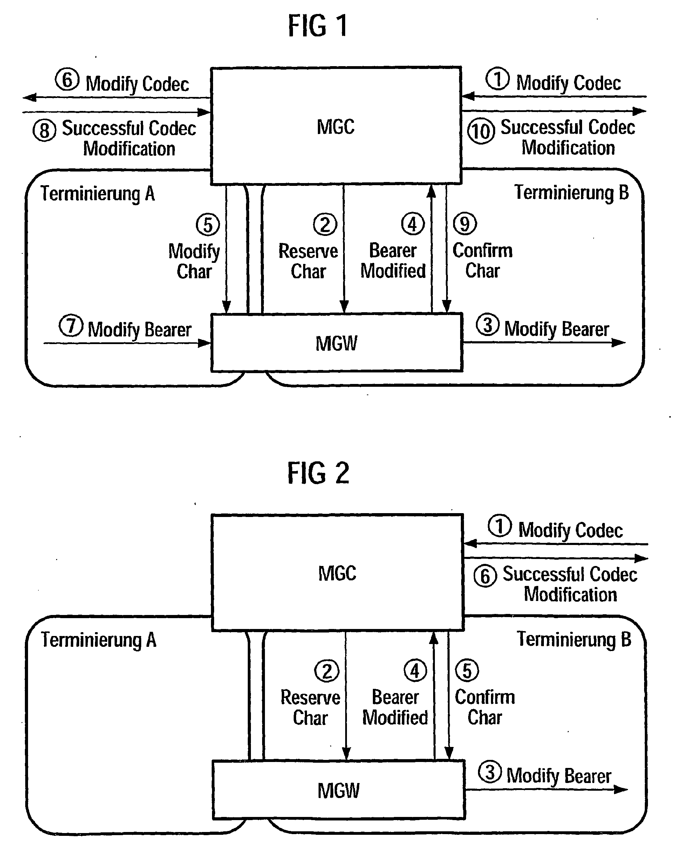

Ein MGW kann aufgrund unterschiedlicher weiterer Signalisierungen (z.B. 5/7/9 in Fig. 1) feststellen (entscheiden), dass es alle Befehle zur Änderung von Codierungen in Terminierungen dieses Kontexts vorliegen hat, beispielsweise weil es eine geeignete Signalisierung vom Mediagatewaycontroller MGC bekommen hat (confirm characteristic 9= bestätige Änderung der Charakterisik (hier der Codierung)), oder weil es für die mit der vom ersten Befehl (2) betroffenen Terminierung B in einem Kontext befindlichen Terminierungen (in Fig. 1: nur Terminierung A) einen Befehl zur Änderung der Codierung dieser Terminierung (in Fig. 1: Terminierung A) bekommen hat etc.

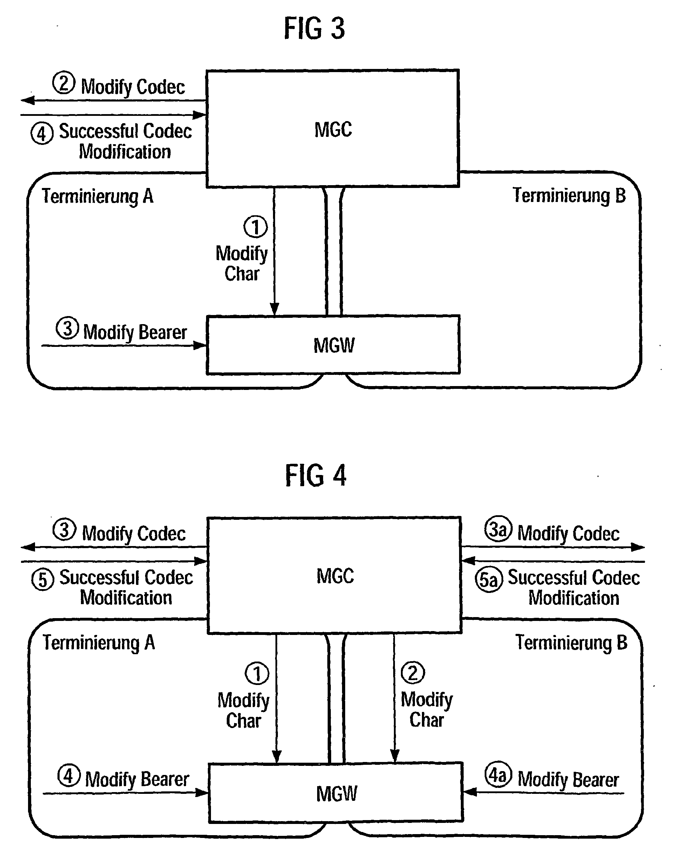

Ein Mediagatewaycontroller, der die Veränderung einer Nutzverbindung mittels der BICC Prozeduren "Codec Modification" und "Codec Re-Negotiation" gemäß Q.1902.4 auslöst, kann diese Prozeduren in Richtung aller in ihm zusammenlaufenden Äste der Nutzverbindung gleichzeitig auslösen. Die Synchronisation dieser getrennten Prozeduren ist bisher in BICC nicht spezifiziert. Eine geeignete Synchronisation der Prozeduren im MGC ist ebenfalls Gegenstand der Erfindung. (Fig. 4: Die Nachrichten 1 und 2 müssen von der MGW bestätigt sein, bevor der MGC die Nachrichten 3 und 3a sendet)

Besonders vorteilhaft sind insbesondere folgende Ausführungsformen:
1. Die Reihenfolge der Signalisierung bei den BICC Prozeduren "Codec Modification" und "Codec Re-Negotiation" gemäß Q.1902.4 wird ausgenützt, um die Prozeduren an der MGW anders als in Q.1950 beschrieben so anzupassen, dass die MGW die Überprüfung auf eine nötige Transcodierung zwischen den Terminierungen in einem Kontext sowie das gegebenenfalls nötige Aktivieren von Transcodern erst zu einem Zeitpunkt durchführt, an dem sie im Fall einer gemeinsamen Modifikation von mehreren Terminierungen vom MGC bereits Signalisierung betreffend der Modifikation aller Terminierungen erhalten hat.
2. Im Fall, dass der MGC die Q.1950 "Reserve Characteristics" Prozedur verwendet, um die MGW zu veranlassen, eine Terminierung zu modifizieren, soll die MGW die Überprüfung und das Aktivieren des Transcoders erst durchführen, wenn der MGC die Modifikation dieser Terminierung mittels der Q. 1950 "Confirm Characteristics" Prozedur zur MGW betätigt.
3. In bevorzugten Ausführungsform von 2 soll im Fall, dass der MGC die Q.1950 "Reserve Characteristics" Prozedur verwendet, um die MGW zu veranlassen, eine Terminierung zu modifizieren, der MGW die Überprüfung und das Aktivieren des Transcoders auch dann durchführen, wenn die MGW von einem Vermittlungsknoten am anderen Ende eines Nutzverbindungsabschnittes mit einer Terminierung im selben Kontext eine Nachricht zum Modifizieren der Nutzverbindung erhalten hat, zum Beispiel die Q.2630 "Modify Bearer" Prozedur.
4. In bevorzugten Ausführungsform von 2, und als Alternative zu 3, soll im Fall, dass der MGC die Q.1950 "Reserve Characteristics" Prozedur verwendet, um die MGW zu veranlassen, eine Terminierung zu modifizieren, der MGW die Überprüfung und das Aktivieren des Transcoders auch dann durchführen, wenn die MGW für alle Terminierungen im selben Kontext vom MGC ebenfalls Befehle zur Modifikation über die Q.1950 "Reserve Characteristics" Prozedur oder die Q.1950 "Modify Characteristics" Prozedur erhalten hat.
5. Im Fall, dass der MGC die Q.1950 "Modify Characteristics" Prozedur verwendet, um die MGW zu veranlassen, eine Terminierung zu modifizieren, soll die MGW die Überprüfung und das Aktivieren des Transcoders erst durchführen, wenn der Vermittlungsknoten am anderen Ende des der Terminierung entsprechenden Nutzverbindungsabschnittes signalisiert, dass die Nutzverbindung modifiziert werden soll.
6. In einer bevorzugten Ausführungsform von 5 soll im Fall, dass der MGC die Q.1950 "Modify Characteristics" Prozedur verwendet, um die MGW zu veranlassen, eine Terminierung zu modifizieren, der MGW die Überprüfung und das Aktivieren des Transcoders auch dann durchführen, wenn die MGW für alle Terminierungen im selben Kontext vom MGC ebenfalls Befehle zur Modifikation über die Q.1950 "Reserve Characteristics" Prozedur oder die Q.1950 "Modify Characteristics". Prozedur erhalten hat.
7. Im Falle, dass der MGC mehrere zu einer Nutzverbindung gehörenden Terminierungen gemeinsam modifiziert, wobei er für mindestens zwei Terminierungen die Q.1950 "Modify Characteristics" Prozedur verwendet, soll der MGC erst die Modify Characteristics" Prozedur für alle diese Terminierungen ausführen, bevor er für die Q.1902.4 Nachrichten "Modify to Selected Codec Information" oder "Modify Codec" zu den Vermittelungsknoten an den anderen Enden der entsprechenden Nutzverbindungsabschnitten schickt. Dieser Fall tritt an einem MGC auf, der eine gleichzeitige Veränderung der Nutzverbindung nach zwei oder mehr Richtungen hin auslöst. Gemäß BICC, Q.1902.4 laufen von dieser MGC in alle Richtungen unabhängig die Prozeduren "Codec Modification" und "Codec Re-Negotiation" ab. Die Synchronisation dieser Prozeduren in dem auslösenden MGC ist Gegenstand der Erfindung. (Siehe Abbildung 4)
8. In einer bevorzugten Ausführungsform von 1 bis 7 werden im MGW nach der Signalisierung über die Q.1950 Protokolle mittels der "Reserve Characteristics" Prozedur oder der Modify Characteristics" Prozedur, dass die Codierung eine bestimmten Terminierung verändert werden soll, alle damit verbundenen Terminierungen im selben "Kontext" inaktiviert (H. 248 "stream mode"), d.h. der MGW leitet keine Nutzdaten von und zu diesen Terminierungen. Allein die zuerst veränderte Terminierung verharrt im Zustand Senden und Empfangen, d.h. leitet Nutzdaten von und zu den betroffenen Terminierungen im selben "Kontext" weiter. Erst nach Eingang von Befehlen zur Veränderung dieser inaktiven Terminierungen gemäß Punkt 1 bis 7 wird die MGW jeweils überprüfen, ob sie die Terminierung(en) in ihrer neuen Codierung miteinander verbinden kann.
9. In einer bevorzugten Ausführungsform von 1 bis 8 kann die MGW die Verbindungen nicht sofort nach der unter 1 genannten Überprüfung wieder herstellen, sondern erst, wenn zusätzlich auch über getrennte Signalisierung, zum Beispiel der in der 3GPP in TS 25.415 und 29.415 spezifizierten Iu FP Initialisierung, mit dem (MGW-) Vermittlungsknoten an den anderen Enden der wieder zu verbindenden Nutzverbindungsabschnitte das Umschalten der Codierung an diesen Terminierungen veranlasst wurde.
10. In einer bevorzugten Ausführungsform von 1 bis 9 kann die MGW die betreffende Terminierung nicht sofort nach Erhalt des Befehls zur Veränderung von der MGC für Nutzdaten aktivieren, d.h. in den Zustand Senden und Empfangen von Nutzdaten setzen, sondern erst, wenn über eine darauf folgende getrennte Signalisierung, zum Beispiel der in der 3GPP in TS 25.415 und 29.415 spezifizierten Iu FP Initialisierung, mit dem (MGW-) Vermittlungsknoten am anderen Ende des Nutzverbindungsabschnittes das Umschalten der Codierung veranlasst wird.
11. In einer bevorzugten Ausführungsform von 1 und 10 kann die MGW den Zeitraum nach dem Eingang des ersten Befehls zur Veränderung einer Terminierung bis zum Eingang des Befehls, der die Überprüfung auslöst, beschränken. Falls in diesem Zeitraum nicht für alle verbundenen Nutzverbindungen entsprechende Befehle eingegangen sind, kann die MGW wieder die ursprüngliche Verbindung der Nutzverbindungen mit der alten Codierung herstellen.

Weitere Merkmale und Vorteile der Erfindung ergeben sich aus den Ansprüchen und der nachfolgenden Beschreibung eines Ausführungsbeispiels anhand der Zeichnung. Dabei zeigt:
Fig. 1 den BICC und CBC Nachrichtenfluss beim Umschalten einer Nutzverbindung von einer Codierung zu einer anderen Codierung für den Fall eines Paares von MGC und MGW, das eine von einem anderen Vermittelungsknoten ausgelöste Modifizierung der Codierung einer Nutzverbindung bearbeitet und weiterreicht,
Fig. 2 den BICC und CBC Nachrichtenfluss beim Umschalten einer Nutzverbindung von einer Codierung zu einer anderen Codierung für den Fall eines Paares von MGC und MGW, das eine von einem anderen Vermittelungsknoten ausgelöste Modifizierung der Codierung einer Nutzverbindung bearbeitet aber nicht weiterreicht,
Fig. 3 den BICC und CBC Nachrichtenfluss beim Umschalten einer Nutzverbindung von einer Codierung zu einer anderen Codierung für den Fall eines Paares von MGC und MGW, das eine Modifizierung der Codierung einer Nutzverbindung in Richtung eines Nutzverbindungsabschnittes selbst auslöst,
Fig. 4 den BICC und CBC Nachrichtenfluss beim Umschalten einer Nutzverbindung von einer Codierung zu einer anderen Codierung für den Fall eines Paares von MGC und MGW, das eine Modifizierung der Codierung einer Nutzverbindung in Richtung zweier durch die MGW verbundener Nutzverbindungsabschnitte selbst auslöst.

Fig. 1 zeigt den BICC und CBC Nachrichtenfluss beim Umschalten einer Nutzverbindung von einer Codierung zu einer anderen Codierung. Der Fall eines Paares von MGC und MGW, das eine von einem anderen Vermittelungsknoten ausgelöste Modifizierung der Codierung einer Nutzverbindung bearbeitet und weiterreicht, ist dargestellt.

Die entsprechenden Zahlen geben die zeitliche Reihenfolge der Nachrichten an. Nachrichten in den von abgerundeten Ecken begrenzten Flächen beziehen sich jeweils auf eine entsprechende Terminierung. Zur Vereinfachung sind die Nachrichtenflüsse nur für zwei involvierte Terminierungen dargestellt. Alle weiteren Terminierungen innerhalb der Verbindung müssen analog behandelt werden. Die Terminierungen sind innerhalb der MGW miteinander verbunden und liegen in demselben "Kontext". Die Nachrichten 2,3,4,5,7 und 9 werden jeweils durch eine unmittelbar darauf folgende Nachricht in Gegenrichtung bestätigt.

Die BICC Prozedur "Codec Modification" ist dargestellt. Bei der BICC Prozedur "Codec Renegotiation", auf die die vorliegende Erfindung ebenfalls anwendbar ist, ist der Nachrichtenfluss identisch, aber anstelle der "Modify Codec" Nachricht (1 und 6) wird die "Modify to Selected Codec Information" Nachricht verwendet.

Der Nachrichtenfluss wird gemäß der Erfindung wie folgt genutzt:
1. Die Nachrichten 2 (Q.1950 "Reserve Characteristics") und 5 (Q.1950 "Modify Characteristics") werden unverändert wie in den Protokollen beschrieben verwendet. Im MGW ändert sich das Verhalten auf diese Nachrichten grundlegend.
2. Nach dem Eingang der Nachricht 2 überprüft die MGW, ob diese Nachricht die erste Anweisung bezogen auf den entsprechenden "Kontext" ist, die eine Veränderung der Codierung bedingt. Trifft diese Bedingung zu, inaktiviert die MGW alle mit dieser Terminierung verbundenen Terminierungen sowie alle Terminierungen in demselben "Kontext". Die Nachricht definiert explizit die angestrebte neue Codierung für den "Kontext".
3. Anschließend (vor dem Versenden der Nachricht 3) aktiviert die MGW die Terminierung B, d.h. setzt diese in den Zustand Senden und Empfangen von Nutzdaten.
4. Nach Eingang der Nachricht 5, oder 7, oder 9 überprüft die MGW, ob in der neuen Codierung eine Verbindung der Terminierungen A und B möglich ist. Falls diese nicht möglich ist, sendet die MGW in der Empfangsbestätigung zu 5 oder 9 eine entsprechende Fehlermeldung. Die weitere Fehlersignalisierung ist hier nicht dargestellt.
5. Andernfalls aktiviert die MGW die Terminierung A unter Verwendung der neuen Codierung (im Fall von Verwendung von Nachricht 5 in Punkt 4 erst nach Eingang der Nachricht 7) wieder und "verbindet" somit die Terminierungen A und B.
6. Alle weiteren, hier nicht dargestellten, inaktiven Terminierungen werden analog verändert.

Fig. 2 zeigt den BICC und CBC Nachrichtenfluss beim Umschalten einer Nutzverbindung von einer Codierung zu einer anderen Codierung. Der Fall eines Paares von MGC und MGW, das eine von einem anderen Vermittelungsknoten ausgelöste Modifizierung der Codierung einer Nutzverbindung bearbeitet aber nicht weiterreicht, ist dargestellt.

Die entsprechenden Zahlen geben die zeitliche Reihenfolge der Nachrichten an. Nachrichten in von abgerundeten Ecken begrenzten Flächen beziehen sich jeweils auf eine entsprechende Terminierung. Die Nachrichten 2,3,4 und 5 werden jeweils durch eine unmittelbar darauf folgende Nachricht in Gegenrichtung bestätigt.

Die BICC Prozedur "Codec Modification" ist dargestellt. Bei der BICC Prozedur "Codec Renegotiation", auf die die vorliegende Erfindung ebenfalls anwendbar ist, ist der Nachrichtenfluss identisch, aber anstelle der "Modify Codec" Nachricht 1 wird die "Modify to Selected Codec Information" Nachricht verwendet.

Der Nachrichtenfluss wird gemäß der Erfindung wie folgt genutzt:
1. Die Nachricht 2 (Q.1950 "Reserve Characteristics") wird unverändert wie in den Protokollen beschrieben verwendet. Im MGW ändert sich das Verhalten auf diese Nachrichten grundlegend.
2. Nach dem Eingang der Nachricht 2 überprüft die MGW, ob diese Nachricht die erste Anweisung bezogen auf den entsprechenden "Kontext" ist, die eine Veränderung der Codierung bedingt. Trifft diese Bedingung zu, inaktiviert die MGW alle mit dieser Terminierung verbundenen Terminierungen sowie alle Terminierungen in demselben "Kontext". Die Nachricht definiert explizit die angestrebte neue Codierung für den "Kontext".
3. Anschließend (vor dem Versenden der Nachricht 3) aktiviert die MGW die Terminierung B, d.h. setzt diese in den Zustand Senden und Empfangen von Nutzdaten.
4. Nach Eingang der Nachricht 5 überprüft die MGW, ob in der neuen Codierung eine Verbindung der Terminierungen A und B möglich ist. Falls diese nicht möglich ist, sendet die MGW in der Empfangsbestätigung zu 5 eine entsprechende Fehlermeldung. Die weitere Fehlersignalisierung ist hier nicht dargestellt.
5. Andernfalls fügt die MGW, falls aufgrund unterschiedlicher Codierungen an Terminierung A und B nötig, einen Transcoder ein und aktiviert dann die Terminierung A unter Verwendung der neuen Codierung wieder und "verbindet" somit die Terminierungen A und B.

Fig. 3 zeigt den BICC und CBC Nachrichtenfluss beim Umschalten einer Nutzverbindung von einer Codierung zu einer anderen Codierung. Der Fall eines Paares von MGC und MGW, das eine Modifizierung der Codierung einer Nutzverbindung in Richtung eines Nutzverbindungsabschnittes selbst auslöst, ist dargestellt.

Die entsprechenden Zahlen geben die zeitliche Reihenfolge der Nachrichten an. Nachrichten in den von abgerundeten Ecken begrenzten Flächen beziehen sich jeweils auf eine entsprechende Terminierung. Die Nachrichten 1 und 3 werden jeweils durch eine unmittelbar darauf folgende Nachricht in Gegenrichtung bestätigt.

Die BICC Prozedur "Codec Modification" ist dargestellt. Bei der BICC Prozedur "Codec Renegotiation", auf die die vorliegende Erfindung ebenfalls anwendbar ist, ist der Nachrichtenfluss identisch, aber anstelle der "Modify Codec" Nachricht 2 wird die "Modify to Selected Codec Information" Nachricht verwendet.

Der Nachrichtenfluss wird gemäß der Erfindung wie folgt genutzt:
1. Die Nachricht 1 (Q.1950 "Modify Characteristics") wird unverändert wie in den Protokollen beschrieben verwendet. Im MGW ändert sich das Verhalten auf diese Nachrichten grundlegend.
2. Nach dem Eingang der Nachricht 1 überprüft die MGW, ob diese Nachricht die erste Anweisung bezogen auf den entsprechenden "Kontext" (="Context") ist, die eine Veränderung der Codierung bedingt. Trifft diese Bedingung zu, inaktiviert die MGW alle mit dieser Terminierung verbundenen Terminierungen sowie alle Terminierungen in demselben "Kontext". Die Nachricht definiert explizit die angestrebte neue Codierung für den "Kontext".
3. Anschließend aktiviert die MGW die Terminierung A, d.h. setzt diese in den Zustand Senden und Empfangen von Nutzdaten.
4. Nach Eingang der Nachricht 3 überprüft die MGW, ob in der neuen Codierung eine Verbindung der Terminierungen A und B möglich ist.
5. Die MGW fügt, falls aufgrund unterschiedlicher Codierungen an Terminierung A und B nötig, einen Transcoder ein und aktiviert dann die Terminierung B unter Verwendung der neuen Codierung wieder und "verbindet" somit die Terminierungen A und B.

Fig. 4 zeigt den BICC und CBC Nachrichtenfluss beim Umschalten einer Nutzverbindung von einer Codierung zu einer anderen Codierung. Der Fall eines Paares von MGC und MGW, das eine Modifizierung der Codierung einer Nutzverbindung in Richtung zweier durch die MGW verbundener Nutzverbindungsabschnitte selbst auslöst, ist dargestellt.

Die entsprechenden Zahlen geben die zeitliche Reihenfolge der Nachrichten an. Die Nachrichten 3, 4, 5 und die Nachrichten 3a, 4a, 5a werden unabhängig vom jeweils anderen Nachrichtenfluss ausgeführt. Nachrichten in den von abgerundeten Ecken begrenzten Flächen beziehen sich jeweils auf eine entsprechende Terminierung. Zur Vereinfachung sind die Nachrichtenflüsse nur für zwei involvierte Terminierungen dargestellt. Alle weiteren Terminierungen innerhalb der Verbindung müssen analog behandelt werden. Die Terminierungen sind innerhalb der MGW miteinander verbunden und liegen in demselben "Kontext". Die Nachrichten 1,2,4 und 4a werden jeweils durch eine unmittelbar darauf folgende Nachricht in Gegenrichtung bestätigt.

Die BICC Prozedur "Codec Modification" ist dargestellt. Bei der BICC Prozedur "Codec Renegotiation", auf die die vorliegende Erfindung ebenfalls anwendbar ist, ist der Nachrichtenfluss identisch, aber anstelle der "Modify Codec" Nachricht (3 und 3a) wird die "Modify to Selected Codec Information" Nachricht verwendet.

Der Nachrichtenfluss wird gemäß der Erfindung wie folgt genutzt:
1. Die Nachrichten 1 und 2 .(Q.1950 "Modify Characteristics") werden vom MGC gesendet und von der MGW bestätigt, bevor der MGC die Nachrichten 3 und 3a (Q.1902.4 "Modify Codec) schickt. Gemäß Q.1902.4 ist nur gefordert, dass der MGC Nachricht 1 vor Nachricht 3 schickt und Nachricht 2 vor Nachricht 3a.
2. Die Nachrichten 1 und 2 (Q.1950 "Modify Characteristics") werden unverändert wie in den Protokollen beschrieben verwendet. Im MGW ändert sich das Verhalten auf diese Nachrichten grundlegend.
3. Nach dem Eingang der Nachricht 1 überprüft die MGW, ob diese Nachricht die erste Anweisung bezogen auf den entsprechenden "Kontext" ist, die eine Veränderung der Codierung bedingt. Trifft diese Bedingung zu, inaktiviert die MGW alle mit dieser Terminierung verbundenen Terminierungen sowie alle Terminierungen in demselben "Kontext". Die Nachricht definiert explizit die angestrebte neue Codierung für den "Kontext".
4. Anschließend aktiviert die MGW die Terminierung A, d.h. setzt diese in den Zustand Senden und Empfangen von Nutzdaten.
5. Nach Eingang der Nachricht 2, oder 4, oder 4a überprüft die MGW, ob in der neuen Codierung eine Verbindung der Terminierungen A und B möglich ist.
6. Die MGW aktiviert die Terminierung B unter Verwendung der neuen Codierung (im Fall von Verwendung von Nachricht 2 in Punkt 5 erst nach Eingang der Nachricht 4a) wieder und "verbindet" somit die Terminierungen A und B.
7. Alle weiteren, hier nicht dargestellten, inaktiven Terminierungen werden analog verändert.

## Patentansprüche

1. Verfahren zur Ausführung eines von einer Mediagateway-Steuerung (MGC) an ein Mediagateway (MGW) signalisierten Befehls (Bezugszeichen 2 in Fig. 1 und 2; Bezugszeichen 1 in Fig. 3 und 4) zur Änderung der Codierung mindestens einer Nutzdaten-Verbindungsabschnitts- Terminierung (Terminierung B in Fig. 1) am Mediagateway (MGW),
**dadurch gekennzeichnet, dass** das Mediagateway (MGW) nach Eingang des Befehls eine Prüfung der Verbindbarkeit der Terminierungen (Terminierung B, Terminierung A in Fig. 1) dieses Kontexts (Terminierung B, Terminierung A etc) mit geänderter (2, 5/7/9) Codierung erst ausführt, wenn es (MGW) aufgrund von einem oder mehreren weiteren, beim Mediagateway (MGW) eingehenden, signalisierten Befehlen (5 oder 7 oder 9 in Fig. 1) feststellt, dass es (MGW) alle aktuell auszuführenden Befehle (2, 5) zur Änderung von Codierungen in Terminierungen dieses Kontexts vorliegen hat.

2. Verfahren nach einem der vorhergehenden Ansprüche, **dadurch gekennzeichnet, dass** das Mediagateway (MGW) neben der Prüfung der Verbindbarkeit der Terminierungen auch mit einer gegebenenfalls erforderlichen Aktivierung einer Transcodierung zwischen Terminierungen von nun voneinander unterschiedlicher Codierung abwartet, bis es (MGW) aufgrund von einem (5 oder 7 oder 9 in Fig. 1) oder mehreren weiteren beim Mediagateway (MGW) eingehenden, signalisierten Befehlen feststellt, dass es alle Befehle zur Änderung von Codierungen in Terminierungen dieses Kontexts vorliegen hat.

3. Verfahren nach einem der vorhergehenden Ansprüche, **dadurch gekennzeichnet, dass** das Mediagateway (MGW) nach Eingang eines Befehls (2) zur Änderung der Codierung mindestens einer Terminierung (Terminierung B) überprüft, ob der eingegangene Befehl (2) der erste aktuell noch nicht abgearbeitete Befehl zur Änderung der Codierung einer Terminierung des Kontext ist und, falls dies der Fall ist, alle Terminierungen (Terminierung A, Terminierung B) dieses Kontexts isoliert oder inaktiviert, bis das Mediagateway (MGW) feststellt, dass es alle aktuellen Befehle zur Änderung der Codierung einer Terminierung dieses Kontexts erhalten hat.

4. Verfahren nach einem der vorhergehenden Ansprüche, **dadurch gekennzeichnet, dass** die Prüfung der Verbindbarkeit von Terminierungen (Terminierung A, Terminierung B)mit gegebenenfalls geänderter Codierung miteinander umfasst, zu prüfen, ob die geänderten Codierungen gleich sind, wobei bei gleicher Codierung die Verbindung der Terminierungen ohne Aktivierung einer Transkodierung erfolgt.

5. Verfahren nach einem der vorhergehenden Ansprüche, **dadurch gekennzeichnet, dass** falls die Prüfung der Verbindbarkeit von Terminierungen (Terminierung A, Terminierung B) ergibt, dass die geänderten Codierungen nicht gleich sind, und das Mediagateway (MGW) sie auch nicht durch Aktivierung einer Transkodierung ineinander umsetzen kann, es (MGW) eine Fehlermeldung an eine Mediagateway-Steuerung (MGC) sendet.

6. Verfahren nach einem der vorhergehenden Ansprüche, **dadurch gekennzeichnet, dass** die Reihenfolge der Signalisierung bei den BICC Prozeduren "Codec Modification" und "Codec Re-Negotiation" gemäß Q.1902. ausgenützt wird, um die Prozeduren an der MGW anders als in Q.1950 beschrieben so anzupassen, dass die MGW die Überprüfung auf eine nötige Transcodierung zwischen den Terminierungen in einem Kontext sowie das gegebenenfalls nötige Aktivieren von Transcodern erst zu einem Zeitpunkt durchführt, an dem sie im Fall einer gemeinsamen Modifikation von mehreren Terminierungen vom MGC bereits Signalisierung betreffend der Modifikation aller Terminierungen erhalten hat.

7. Verfahren nach einem der vorhergehenden Ansprüche, **dadurch gekennzeichnet, dass**, falls der MGC die Q.1950 "Reserve Characteristics" Prozedur verwendet, um die MGW zu veranlassen, eine Terminierung zu modifizieren, die MGW die Überprüfung und das Aktivieren des Transcoders erst durchführt, wenn der MGC die Modifikation dieser Terminierung mittels der Q. 1950 "Confirm Characteristics" Prozedur zur MGW betätigt.

8. Verfahren nach einem der vorhergehenden Ansprüche, **dadurch gekennzeichnet, dass** im Fall, dass der MGC die Q.1950 "Reserve Characteristics" Prozedur verwendet, um die MGW zu veranlassen, eine Terminierung zu modifizieren, das MGW die Überprüfung und das Aktivieren des Transcoders auch dann durchführt, wenn die MGW von einem Vermittlungsknoten am anderen Ende eines Nutzverbindungsabschnittes mit einer Terminierung im selben Kontext eine Nachricht zum Modifizieren der Nutzverbindung erhalten hat, insbesondere die Q.2630 "Modify Bearer" Prozedur.

9. Verfahren nach einem der vorhergehenden Ansprüche, **dadurch gekennzeichnet, dass**, falls der MGC die Q.1950 "Reserve Characteristics" Prozedur verwendet, um die MGW zu veranlassen, eine Terminierung zu modifizieren, der MGW die Überprüfung und das Aktivieren des Transcoders auch dann durchführt, wenn die MGW von einem Vermittlungsknoten am anderen Ende eines Nutzverbindungsabschnittes mit einer Terminierung im selben Kontext eine Nachricht zum Modifizieren der Nutzverbindung erhalten hat, insbesondere die Q.2630 "Modify Bearer" Prozedur.

10. Verfahren nach einem der vorhergehenden Ansprüche, **dadurch gekennzeichnet, dass**, falls der MGC die Q.1950 "Reserve Characteristics" Prozedur verwendet, um die MGW zu veranlassen, eine Terminierung zu modifizieren, der MGW die Überprüfung und das Aktivieren des Transcoders auch dann durchführt, wenn die MGW für alle Terminierungen im selben Kontext vom MGC ebenfalls Befehle zur Modifikation über die Q.1950 "Reserve Characteristics" Prozedur oder die Q.1950 "Modify Characteristics" Prozedur erhalten hat.

11. Verfahren nach einem der vorhergehenden Ansprüche, **dadurch gekennzeichnet, dass**, falls der MGC die Q.1950 "Modify Characteristics" Prozedur verwendet, um die MGW zu veranlassen, eine Terminierung zu modifizieren, das MGW die Überprüfung und das Aktivieren des Transcoders erst durchführt, wenn der Vermittlungsknoten am anderen Ende des der Terminierung entsprechenden Nutzverbindungsabschnittes signalisiert, dass die Nutzverbindung modifiziert werden soll, insbesondere mittels der Q.2630 "Modify Bearer" Prozedur.

12. Verfahren nach einem der vorhergehenden Ansprüche, **dadurch gekennzeichnet, dass** in dem Fall, dass der MGC die Q.1950 "Modify Characteristics" Prozedur verwendet, um die MGW zu veranlassen, eine Terminierung zu modifizieren, der MGW die überprüfung und das Aktivieren des Transcoders auch dann durchführt, wenn die MGW für alle Terminierungen im selben Kontext vom MGC ebenfalls Befehle zur Modifikation über die Q.1950 "Reserve Characteristics" Prozedur oder die Q.1950 "Modify Characteristics" Prozedur erhalten hat.

13. Verfahren nach einem der vorhergehenden Ansprüche, **dadurch gekennzeichnet, dass** in dem Falle, dass der MGC mehrere zu einer Nutzverbindung gehörenden Terminierungen gemeinsam modifiziert, wobei er für mindestens zwei Terminierungen die Q.1950 "Modify Characteristics" Prozedur verwendet, der MGC erst die Modify Characteristics" Prozedur für alle diese Terminierungen ausführt, bevor er für die Q.1902.4 Nachrichten "Modify to Selected Codec Information" oder "Modify Codec" zu den Vermittelungsknoten an den anderen Enden der entsprechenden Nutzverbindungsabschnitten schickt. (Fig. 4)

14. Verfahren nach einem der vorhergehenden Ansprüche, **dadurch gekennzeichnet, dass** falls im MGW nach der Signalisierung über die Q.1950 Protokolle mittels der "Reserve Characteristics" Prozedur oder der Modify Characteristics" Prozedur die Codierung eine bestimmten Terminierung verändert werden soll, alle damit verbundenen Terminierungen im selben "Kontext" inaktiviert (H.248 "stream mode") werden, und der MGW keine Nutzdaten von und zu diesen Terminierungen weiterleitet, wobei allein die zuerst veränderte Terminierung im Zustand Senden und Empfangen verharrt und Nutzdaten von und zu den betroffenen Terminierungen im selben "Kontext" weiter leitet und erst nach Eingang von Befehlen zur Veränderung dieser inaktiven Terminierungen die MGW jeweils überprüft, ob sie die Terminierung (en) in ihrer neuen Codierung miteinander verbinden kann.

15. Verfahren nach einem der vorhergehenden Ansprüche, **dadurch gekennzeichnet, dass** die MGW die Verbindungen nicht sofort nach der unter 1 genannten Überprüfung wieder herstellt, sondern erst, wenn zusätzlich auch über getrennte Signalisierung, zum Beispiel der in der 3GPP in TS 25.415 und 29.415 spezifizierten Iu FP Initialisierung, mit dem (MGW-) Vermittlungsknoten an den anderen Enden der wieder zu verbindenden Nutzverbindungsabschnitte das Umschalten der Codierung an diesen Terminierungen veranlasst wurde.

16. Verfahren nach einem der vorhergehenden Ansprüche, **dadurch gekennzeichnet, dass** die MGW die betreffende Terminierung nicht sofort nach Erhalt des Befehls zur veränderung von der MGC für Nutzdaten aktiviert, indem sie diese in den Zustand Senden und Empfangen von Nutzdaten setzt, sondern erst, wenn über eine darauf folgende getrennte Signalisierung, zum Beispiel der in der 3GPP in TS 25.415 und 29.415 spezifizierten Iu FP Initialisierung, mit dem (MGW-) Vermittlungsknoten am anderen Ende des Nutzverbindungsabschnittes das Umschalten der Codierung veranlasst wird.

17. Verfahren nach einem der vorhergehenden Ansprüche, **dadurch gekennzeichnet, dass** die MGW den Zeitraum nach dem Eingang des ersten Befehls zur Veränderung einer Terminierung bis zum Eingang des Befehls, der die Überprüfung auslöst, beschränkt und, falls in diesem Zeitraum nicht für alle verbundenen Nutzverbindungen entsprechende Befehle eingegangen sind, die MGW wieder die ursprüngliche Verbindung der Nutzverbindungen mit der alten Codierung herstellt.

## Claims

1. Method for executing a command signaled from a Media Gateway Controller (MGC) to a Media Gateway (MGW) (reference symbol 2 in Fig. 1 and 2; reference symbol 1 in Fig. 3 and 4) to change the coding of at least one load data connection section termination (termination B in Fig. 1) at the Media Gateway (MGW),
**characterized in that** the Media Gateway (MGW) after arrival of the command only checks for the connectibility of the terminations (termination B, termination A in Fig. 1) of this context (termination B, termination A etc) with changed (2, 5/7/9) coding if it (MGW) establishes, as a result of one or more further signaled commands arriving at the Media Gateway (MGW) (5 or 7 or 9 in Fig. 1) that it (MGW) has available all current commands to be executed (2, 5) for changing the codings in terminations of this context.

2. Method according to one of the previous claims,
**characterized in that**, the Media Gateway (MGW) as well as checking the connectibility of the terminations, also waits before any activation of a transcoding that may be required between terminations for which the coding now differs, until it (MGW) as a result of one (5 or 7 or 9 in Fig. 1) or more further signaled commands arriving at the Media Gateway (MGW) establishes that it has available to it all commands for changing the codings of terminations of this context.

3. Method according to one of the previous claims,
**characterized in that** the Media gateway (MGW), after arrival of a command (2) for changing the coding of at least one termination (termination B) checks whether the command (2) that has arrived is the first currently not yet processed command for changing the coding of a termination of the context, and, if it is, isolates or deactivates all terminations (termination A, termination B) of this context until the Media Gateway (MGW) establishes that it has received all current commands for changing the coding of a termination of this context.

4. Method according to one of the previous claims,
**characterized in that** the checking includes of the connectibility of terminations (termination A, termination B) to one another with if necessary changed coding to check whether the changed codings are the same, whereby, if they are the same, the terminations are connected without activation of a transcoding.

5. Method according to one of the previous claims,
**characterized in that**, if the checking of the connectibility of terminations (termination A, termination B) reveals that the changed codings are not the same, and the Media Gateway (MGW) can also not convert them into each other by activating a transcoding, it (MGW) sends an error message to a Media Gateway Controller (MGC).

6. Method according to one of the previous claims,
**characterized in that** the sequence of the signaling for the BICC procedures "Codec Modification" and "Codec Renegotiation" according to Q.1902 is utilized in order to adapt the procedure to the MGW other than in the way described in Q.1950 so that the MGW only performs the check for a necessary transcoding between the terminations in a context as well as any activation of transcoders that may be required at a point at which, in the case of a joint modification of a number of terminations by the MGC, it has already received signaling relating to the modification of all terminations.

7. Method according to one of the previous claims,
**characterized in that**, if the MGC uses the Q.1950 "Reserve Characteristics" procedure to cause the MGW to modify a termination, the MGW only checks and activates the transcoder if the MGC activates the modification of this termination by means of the Q. 1950 "Confirm Characteristics" procedure to the MGW.

8. Method according to one of the previous claims,
**characterized in that**, in the case in which the MGC uses the Q.1950 "Reserve Characteristics" procedure to cause the MGW to modify a termination, the MGW only checks and activates the transcoder if the MGW has received from a media gateway at the other end of a load connection section with a termination in the same context a message to modify the load connection, especially the Q.2630 "Modify Bearer" procedure.

9. Method according to one of the previous claims,
**characterized in that**, if the MGC uses the Q.1950 "Reserve Characteristics" procedure to cause the MGW to modify a termination, the MGW also checks and activates the transcoder if the MGW has received from a media gateway at the other end of a load connection section with a termination in the same context a message to modify the load connection, especially the Q.2630 "Modify Bearer" procedure.

10. Method according to one of the previous claims,
**characterized in that**, if the MGC uses the Q.1950 "Reserve Characteristics" procedure to cause the MGW to modify a termination, the MGW also checks and activates the transcoder if the MGW has also received from the MGC, for all terminations in the same context, commands for modification via the Q.1950 "Reserve Characteristics" procedure or the Q.1950 "Modify Characteristics" procedure.

11. Method according to one of the previous claims,
**characterized in that**, if the MGC uses the Q.1950 "Modify Characteristics" procedure to cause the MGW to modify a termination, the MGW only checks and activates the transcoder if the media gateway at the other end of the load connection section corresponding to the termination signals that the load connection is to be modified, especially by means of the Q.2630 "Modify Bearer" procedure.

12. Method according to one of the previous claims,
**characterized in that**, in the case in which the MGC uses the Q.1950 "Modify Characteristics" procedure to cause the MGW to modify a termination, the MGW also checks and activates the transcoder if the MGW has also received from the MGW for all terminations in the same context commands for modification via the Q.1950 "Reserve Characteristics" procedure or the Q.1950 "Modify Characteristics" procedure.

13. Method according to one of the previous claims,
**characterized in that**, in the case in which the MGC is jointly modifying a number of terminations belonging to a load connection, where it uses the Q.1950 "Modify Characteristics" procedure for at least two terminations, the MGC first executes the Modify Characteristics" procedure for all these termination before sending for Q.1902.4 the messages "Modify to Selected Codec information" or "Modify Codec" to the media gateway at the other ends of the corresponding load connection section. (Fig. 4)

14. Method according to one of the previous claims,
**characterized in that**, if after signaling via the Q.1950 protocol by means of the "Reserve Characteristics" procedure or the Modify Characteristics" procedure, the coding of a specific termination is to be changed in the MGW, all terminations associated with it in the same "context" are deactivated (H.248 "stream ") and the MGW does not direct any load data from and to these terminations, where just the first termination changed goes into the transmit and receive state and forwards load data from and to the terminations involved in the same "context" and only after arrival of commands to change these inactive terminations does the MGW check whether it can connect the termination(s) together in its (their) new coding.

15. Method according to one of the previous claims,
**characterized in that** the MGW does not immediately reestablish the connections after the checks specified in 1, but first, even if additionally using separate signaling, for example the Iu FP initialization specified in 3GPP in TS 25.415 and 29.415, the changeover the coding at these terminations would be instigated with the MGW at the other ends of the load connection sections to be connected again.

16. Method according to one of the previous claims,
**characterized in that** the MGW does not immediately activate the relevant termination after receiving the command for modifying from the MGC for load data, by setting it to transmit and receive load, but first, even if using subsequent separate signaling, for example the Iu FP initialization specified in 3GPP in TS 25.415 and 29.415, the changeover of the coding is instigated with the MGW at the other end of the load connection.

17. Method according to one of the previous claims,
**characterized in that** the MGW restricts the period of time between the arrival of the first command for changing of a termination and the arrival of the command which initiates the checking, and, if the corresponding commands for all connected load connections have not arrived within this period, the MGW establishes the original connection of the load connections again with the old coding.

## Revendications

1. Procédé pour exécuter un ordre (référence 2 sur les figures 1 et 2; référence 1 sur les figures 3 et 4) de modification du codage d'au moins une terminaison de section de liaison de données utiles (terminaison B sur la figure 1) au niveau de la passerelle média (MGW), signalé par un contrôleur de passerelle média (MGC) à une passerelle média (MGW), **caractérisé en ce que** la passerelle média (MGW), après l'entrée de l'ordre, n'opère un examen de la connectabilité des terminaisons (terminaison B, terminaison A sur la figure 1) de ce contexte (terminaison B, terminaison A etc.) avec un codage modifié (2, 5/7/9) que lorsqu'elle (MGW) constate, sur la base d'un ou plusieurs autres ordres (5 ou 7 ou 9 sur la figure 1) signalés qui entrent au niveau de la passerelle média (MGW), qu'elle (MGW) dispose de tous les ordres (2, 5), actuellement à exécuter, de modification de codages dans des terminaisons de ce contexte.

2. Procédé selon l'une des revendications précédentes, **caractérisé en ce que** la passerelle média (MGW) attend, non seulement pour contrôler la connectabilité des terminaisons, mais aussi pour opérer une activation le cas échéant requise d'un transcodage entre des terminaisons à codage maintenant différent l'un de l'autre, jusqu'à ce qu'elle (MGW) constate, sur la base d'un (5 ou 7 ou 9 sur la figure 1) ou plusieurs autres ordres signalés qui entrent au niveau de la passerelle média (MGW), qu'elle dispose de tous les ordres de modification de codages dans des terminaisons de ce contexte.

3. Procédé selon l'une des revendications précédentes, **caractérisé en ce que** la passerelle média (MGW), après l'entrée d'un ordre (2) de modification du codage d'au moins une terminaison (terminaison B), vérifie si l'ordre (2) qui est entré est le premier ordre de modification du codage d'une terminaison du contexte actuellement non encore exécuté et, si tel est le cas, isole ou inactive toutes les terminaisons (terminaison A, terminaison B) de ce contexte jusqu'à ce que la passerelle média (MGW) constate qu'elle a reçu tous les ordres actuels de modification du codage d'une terminaison de ce contexte.

4. Procédé selon l'une des revendications précédentes, **caractérisé en ce que** le contrôle de l'interconnectabilité de terminaisons (terminaison A, terminaison B) avec un codage le cas échéant modifié inclut le contrôle de l'identité entre les codages modifiés, la connexion des terminaisons se faisant sans activation d'un transcodage si le codage est identique.

5. Procédé selon l'une des revendications précédentes, **caractérisé en ce que**, s'il résulte du contrôle de la connectabilité de terminaisons (terminaison A, terminaison B) que les codages modifiés ne sont pas identiques et que la passerelle média (MGW) ne peut pas non plus les convertir l'un dans l'autre par activation d'un transcodage, elle (MGW) envoie un message d'erreur à un contrôleur de passerelle média (MGC).

6. Procédé selon l'une des revendications précédentes, **caractérisé en ce que** l'ordre de la signalisation, dans les procédures BICC «Codec Modification» et «Codec Re-Negotiation» selon Q.1902., est utilisé pour adapter les procédures au niveau de la MGW de manière telle, à la différence de ce qui est décrit dans Q.1950, que la MGW n'effectue le contrôle relatif à un transcodage nécessaire entre les terminaisons dans un contexte, ainsi que l'activation de transcodeurs, requise le cas échéant, qu'à un instant auquel elle a déjà reçu du MGC une signalisation concernant la modification de toutes les terminaison dans le cas d'une modification commune de plusieurs terminaisons.

7. Procédé selon l'une des revendications précédentes, **caractérisé en ce que**, dans le cas où le MGC utilise la procédure Q.1950 «Reserve Characteristics» pour faire modifier une terminaison par la MGW, la MGW n'opère le contrôle et l'activation du transcodeur que lorsque le MGC actionne la modification de cette terminaison au moyen de la procédure Q.1950 «Confirm Characteristics» vers la MGW.

8. Procédé selon l'une des revendications précédentes, **caractérisé en ce que** la MGW, dans le cas où le MGC utilise la procédure Q.1950 «Reserve Characteristics» pour faire modifier une terminaison par la MGW, opère le contrôle et l'activation du transcodeur même si la MGW a reçu d'un noeud de commutation à l'autre extrémité d'une section de liaison utile avec une terminaison dans le même contexte un message de modification de la liaison utile, en particulier la procédure Q.2630 «Modify Bearer».

9. Procédé selon l'une des revendications précédentes, **caractérisé en ce que** la MGW, dans le cas où le MGC utilise la procédure Q.1950 «Reserve Characteristics» pour faire modifier une terminaison par la MGW, opère le contrôle et l'activation du transcodeur même si la MGW a reçu d'un noeud de commutation à l'autre extrémité d'une section de liaison utile avec une terminaison dans le même contexte un message de modification de la liaison utile, en particulier la procédure Q.2630 «Modify Bearer».

10. Procédé selon l'une des revendications précédentes, **caractérisé en ce que**, dans le cas où le MGC utilise la procédure Q.1950 «Reserve Characteristics» pour faire modifier une terminaison par la MGW, la MGW opère le contrôle et l'activation du transcodeur même si la MGW a également reçu du MGC, pour toutes les terminaisons dans le même contexte, des ordres de modification via la procédure Q.1950 «Reserve Characteristics» ou la procédure Q.1950 «Modify Characteristics».

11. Procédé selon l'une des revendications précédentes, **caractérisé en ce que** la MGW, dans le cas où le MGC utilise la procédure Q.1950 «Modify Characteristics» pour faire modifier une terminaison par la MGW, n'opère le contrôle et l'activation du transcodeur que lorsque le noeud de commutation à l'autre extrémité de la section de liaison utile correspondant à la terminaison signale que la liaison utile doit être modifiée, en particulier au moyen de la procédure Q.2630 «Modify Bearer».

12. Procédé selon l'une des revendications précédentes, **caractérisé en ce que** la MGW, dans le cas où le MGC utilise la procédure Q.1950 «Modify Characteristics» pour faire modifier une terminaison par la MGW, opère le contrôle et l'activation du transcodeur même si la MGW a également reçu du MGC, pour toutes les terminaisons dans le même contexte, des ordres de modification via la procédure Q.1950 «Reserve Characteristics» ou la procédure Q.1950 «Modify Characteristics».

13. Procédé selon l'une des revendications précédentes, **caractérisé en ce que**, dans le cas où le MGC modifie plusieurs terminaisons d'une liaison utile conjointement en utilisant la procédure Q.1950 «Modify Characteristics» pour au moins deux terminaisons, le MGC exécute d'abord la procédure «Modify Characteristics» pour toutes ces terminaisons avant d'envoyer pour les messages Q.1902.4 «Modify to Selected Codec Information» ou «Modify Codec» aux noeuds de commutation aux autres extrémités des sections correspondantes de liaisons utiles. (Figure 4)

14. Procédé selon l'une des revendications précédentes, **caractérisé en ce que**, s'il s'agit de modifier le codage d'une terminaison déterminée dans la MGW après la signalisation via les protocoles Q.1950 au moyen de la procédure «Reserve Characteristics» ou «Modify Characteristics», toutes les terminaisons dans le même «contexte» qui y sont connectées sont inactivées (H.248, «stream mode») et la MGW ne retransmet pas de données utiles de et vers ces terminaisons, seule la terminaison modifiée en premier lieu persistant à l'état d'émission et réception et retransmettant des données utiles de et vers les terminaisons concernées dans le même «contexte», et la MGW ne vérifiant dans chaque cas qu'après l'entrée d'ordres de modification de ces terminaisons inactives si elle peut interconnecter la/les terminaisons dans leur nouveau codage.

15. Procédé selon l'une des revendications précédentes, **caractérisé en ce que** la MGW rétablit les connexions non pas immédiatement après le contrôle mentionné sous 1, mais seulement lorsqu'il a été fait en sorte, additionnellement, que se produise également l'inversion du codage au niveau de ces terminaisons par l'intermédiaire d'une signalisation séparée, par exemple de l'initialisation Iu FP spécifiée dans le 3GPP dans TS 25.425 et 29.415, avec le noeud de commutation (MGW) aux autres extrémités des sections de liaisons utiles à reconnecter.

16. Procédé selon l'une des revendications précédentes, **caractérisé en ce que** la MGW active la terminaison concernée non pas immédiatement après la réception de l'ordre de modification par le MGC pour des données utiles en mettant celle-ci à l'état d'émission et réception de données utiles, mais seulement lorsqu'il est fait en sorte que se produise l'inversion du codage par l'intermédiaire d'une signalisation séparée subséquente, par exemple de l'initialisation Iu FP spécifiée dans le 3GPP dans TS 25.425 et 29.415, avec le noeud de commutation (MGW) à l'autre extrémité de la section de liaison utile.

17. Procédé selon l'une des revendications précédentes, **caractérisé en ce que** la MGW limite l'espace de temps suivant l'entrée du premier ordre de modification d'une terminaison jusqu'à l'entrée de l'ordre qui déclenche le contrôle et, si, dans cet espace de temps, des ordres adéquats ne sont pas entrés pour toutes les liaisons utiles connectées, la MGW rétablit la connexion initiale des liaisons utiles avec l'ancien codage.
